# EUROPÄISCHE PATENTSCHRIFT

(11) **EP 3 041 322 B1**
(45) Veröffentlichungstag und Bekanntmachung des Hinweises auf die Patenterteilung: **04.07.2018**
(21) Anmeldenummer: 15202775.1
(22) Anmeldetag: 28.12.2015
(51) Int. Cl.: H05B 37/02, H05B 33/08, F21S 10/02

(54) **VERFAHREN ZUR STEUERUNG DER FARBTEMPERATUR EINER BELEUCHTUNGSEINRICHTUNG**
METHOD FOR CONTROLLING THE COLOUR TEMPERATURE OF A LIGHTING DEVICE
PROCÉDÉ POUR LE RÉGLAGE DE LA TEMPÉRATURE DE COULEUR D'UN MODULE D'ÉCLAIRAGE

(30) Priorität: 29.12.2014 AT 509492014
(43) Veröffentlichungstag der Anmeldung: 06.07.2016
(73) Patentinhaber: Nickel, Martin, 1140 Wien (AT)
(72) Erfinder: Nickel, Martin, 1140 Wien (AT)
(74) Vertreter: Babeluk, Michael

(56) Entgegenhaltungen:
- DE-A1-102009 011 688
- DE-U1-202010 013 133
- US-A1- 2008 280 564
- Anonymous: "Getestet: Medisana Lichtwecker SAC 45100", , 19. April 2011 (2011-04-19), XP055267148, Gefunden im Internet: URL:http://www.useful-it-pad.com/2011/04/g etestet-medisana-lichtwecker-sac-45100/ [gefunden am 2016-04-20] & "Medisana Lichtwecker SAC 45100 Gebrauchsanweisung", , 19. April 2011 (2011-04-19), XP055267152, Gefunden im Internet: URL:http://www.medisana.de/out/pictures/me dia/sac_west_web_fl.pdf [gefunden am 2016-04-20]

## Beschreibung

Die vorliegende Erfindung betrifft ein Verfahren zur Steuerung einer Beleuchtungseinrichtung gemäß dem Oberbegriff von Patentanspruch 1. Die vorliegende Erfindung betrifft auch eine durch Patentanspruch 4 beschriebene Beleuchtungseinrichtung. Licht, und zwar insbesondere die Lichtfarbe (d.h. die Farbtemperatur) hat bekanntermaßen einen großen Einfluss auf die Stimmung des Menschen. Dafür sind einige Hormone des menschlichen Körpers verantwortlich, nämlich Melatonin (Schlafhormon), das entspannend wirkt, Cortisol (Stresshormon) das aktivierend wirkt, Serotonin (Stimmungsaufheller) und andere. Nach heutigem Kenntnisstand bewirkt Serotonin im Wesentlichen die Förderung des Wachzustands.

Im Detail kann Einfluss der Lichtfarbe auf die Hormonbildung zusammengefasst werden:
Kaltweißes natürliches Licht im Bereich von > 5.500 K hemmt die Produktion von Melatonin und fördert die Produktion von Cortisol und Serotonin.

Hohe Farbtemperaturen von > 5.500 K wirken also aktivierend auf den Menschen und niedrige Farbtemperaturen von < 3.000 K wirken entspannend, schlaffördernd.

Das Mitteleuropäische Sonnenlicht hat über den Tagesverlauf eine durchschnittliche Farbtemperatur von ca. 5.700 K.

Auch unter Tags ist es oft notwendig, die Beleuchtung in Innenräumen durch künstliches Licht zu ergänzen. Künstliches Licht, das beispielsweise durch herkömmliche Glühlampen erzeugt wird, hat eine wesentlich geringere Farbtemperatur, ist also wesentlich rötlicher als natürliches Licht, was zu Problemen führt. Am Markt gibt es daher seit längerer Zeit sogenannte Tageslichtlampen. Ihre Farbtemperatur liegt nach DIN EN 12.464 bei 5.300 bis 6.500 Kelvin. Sie werden vor allem zur Beleuchtung von Arbeitsplätzen eingesetzt. Im medizinischen Bereich werden Tageslichtlampen in der Lichttherapie gegen Winterdepression eingesetzt.

Am Abend und in der Nacht hemmen die Tageslichtlampen aber die Melatoninproduktion und verhindern somit einen natürlichen Entspannungs- und Schlafprozess.

Warmweißes Licht mit weniger Blau Anteil, welches die Melatonin Produktion nicht hemmt wird in dieser Beziehung als angenehmer und entspannender empfunden.

Eine Wahl der richtigen Farbtemperatur speziell für den Heimbereich ist daher schwierig und immer ein Kompromiss.

Durch den Einsatz von LEDs in der Beleuchtung ist es möglich, die Farbtemperatur zu steuern. Das kann in an sich bekannter Weise entweder durch Mischen von Farb-LEDs (RGB) geschehen oder einfacher durch Mischen von kaltweißen und warmweißen LEDs.

Während des Tages werden solche Beleuchtungskörper typischerweise so angesteuert, dass die Lichtfarbe kaltweiß ist, während am Morgen und am Abend bzw. in der Nacht warmweißes Licht abgestrahlt wird. Auf diese Weise können positive Auswirkungen auf Personen erzielt werden, die nicht nur das subjektive Wohlbefinden steigern, sondern auch beispielsweise die Leistungsfähigkeit erhöhen.

Grundsätzlich ist es möglich, die Steuerung der Lichtfarbe so durchzuführen, dass über einen Lichtsensor im Außenbereich das jeweils vorhandene Tageslicht erfasst wird und in Abhängigkeit davon der Beleuchtungskörper angesteuert wird. Eine solche Lösung ist jedoch aufwändig, da jedenfalls an geeigneter Stelle ein Außensensor angebracht werden muss und auch eine Verbindung zwischen diesem Außensensor und den Beleuchtungskörper hergestellt werden muss. Die Lösung ist auch fehleranfällig, da der Außensensor durch künstliche Lichtquellen gestört werden kann und jedenfalls eine starke Abhängigkeit von der jeweiligen Wetterlage gegeben ist.

Eine Alternative dazu ist eine zeitabhängige Steuerung des Beleuchtungskörpers, wie sie etwa in der DE 20 2001 104 251 U beschrieben ist. Damit ist eine relativ einfache Möglichkeit gegeben, die Farbtemperatur an den Tagesablauf anzupassen. Ein Problem ist jedoch die Bereitstellung der aktuellen Tageszeit, um auch tatsächlich ein den natürlichen Verhältnissen angepasstes Beleuchtungsschema verwirklichen zu können. Dazu ist beispielsweise die Verbindung aller anzustellenden Beleuchtungseinrichtungen mit einem entsprechenden Computersystem erforderlich, oder es ist zumindest eine Steuerungseinrichtung vorzusehen, die eine Uhr und die Möglichkeit der Einstellung dieser Uhr bereitstellt. Dies bedingt einen erhöhten Aufwand sowohl in apparativer Hinsicht als auch im Hinblick auf die Wartung.

Die Lösungen mit eingebauten Uhren ohne regelmäßige Synchronisation haben außerdem das Problem der Ungenauigkeit. Naturgemäß entwickeln Beleuchtungseinrichtungen Wärme, diese Wärme hat aber negativen Einfluss auf die Genauigkeit der Uhrenquarze. Speziell bei langlebigen LED Leuchtmitteln wird es dem Anwender unverständlich warum sich Regelzeiten über die Jahre ändern. Somit müssen solche Lösungen regelmäßig Zeitsynchronisiert werden.

Es ist auf diese Weise nicht möglich, ein Leuchtmittel darzustellen, das unproblematisch verwendbar ist, aber gleichzeitig die Funktionalität der Anpassung der Lichtfarbe besitzt.

Ein weiteres Problem in diesem Zusammenhang ist die Tatsache, dass die jeweils offizielle Ortszeit von der lokalen astronomischen Zeit relativ stark abweichen kann. So umfasst die mitteleuropäische Zeit etwa 33 Längengrade, was in Bezug auf den Sonnenstand einen Unterschied von mehr als zwei Stunden ausmacht.

Aus dem Internetauftritt zu Medisana Lichtwecker SAC 45100 (http://www.useful-it-pad.com/2011/04/getestet-medisana-lichtwecker-sac-45100/) und der Gebrauchsanweisung dazu ist ein Verfahren zur Steuerung einer Beleuchtungseinrichtung bekannt, bei dem die Farbtemperatur des Leuchtmittels der Tageszeit entsprechend verändert wird. Die dazu erforderliche Zeitinformation wird aus einem RDS-Signal gewonnen.

Weitere Verfahren zur Steuerung von Beleuchtungseinrichtungen sind aus der DE 10 2009 011 688 A und der DE 20 1020 013 133 U bekannt.

Sämtliche dieser bekannten Verfahren funktionieren nur dann zufriedenstellend, wenn der tatsächliche Verlauf des Sonnenstandes der jeweils aktuellen Uhrzeit entspricht. Für jede Zeitzone ist dies nur im Bereich eines bestimmten Längengrads der Fall. Befindet sich der Aufstellungsort der Beleuchtungseinrichtung deutlich im Westen oder im Osten dieses Längengrads, dann entspricht der dort tatsächlich zu beobachtende Sonnenstand nicht dem theoretischen Wert für die betreffende Zeitzone, wobei die zeitliche Abweichung 4 Minuten pro Längengrad ausmacht. Theoretisch könnte diese Abweichung durch eine Korrekturgröße berücksichtigt werden, die vom Aufstellungsort der Beleuchtungseinrichtung abhängt. Dies ist jedoch umständlich und fehleranfällig.

Aufgabe der vorliegenden Erfindung ist es, diese Nachteile zu vermeiden und eine Lösung anzugeben, die einfach und vielseitig anwendbar ist. Gleichzeitig soll es möglich sein, eine korrekte Anpassung in Abhängigkeit von dem jeweiligen Aufstellungsort zu erreichen.

Erfindungsgemäß werden diese Aufgaben durch die Merkmale von Patentanspruch 1 gelöst.

Bei RDS (Radio Data System) handelt es sich um ein weit verbreitetes System zur Datenübertragung als Zusatz bei der Verbreitung von Hörfunk. Dabei werden unter anderem Sender-Informationen und ein Zeitsignal übertragen. Zum Empfang von RDS-Signalen stehen im Handel kompakte Empfangseinheiten kosten günstig zur Verfügung. In sehr vielen Ländern ist es problemlos möglich, praktisch flächendeckend Radiosender mit RDS-Funktionalität zu empfangen.

Damit ist es auf einfache Weise möglich, ein Zeitsignal zu empfangen, ohne die Notwendigkeit, dieses einstellen oder überwachen zu müssen. Der Installationsaufwand kann insbesondere dadurch gering gehalten werden, dass die Steuerungseinheit, die das Zeitsignal empfängt, nahe dem Leuchtmittel oder in das Leuchtmittel integriert ausgeführt werden kann.

Die erfindungsgemäße Lösung bietet auch den Vorteil, dass RDS-Signale leichter und stabiler empfangen werden können als beispielsweise Zeitsignale auf der Wellenlänge von 77 kHz.

Die vorliegende Erfindung ermöglicht es nun die Farbtemperatur der Beleuchtung vollautomatisch nach den natürlichen Lichtverhältnissen zu regeln. In Abhängigkeit von Tageszeit, Jahreszeit und geografischem Aufstellungsort: Wenn Tageslicht scheint, leuchtet die Beleuchtung kaltweiß, mit Sonnenuntergang ändert sich die Lichtfarbe auf warmweiß; in umgekehrter Richtung wieder mit Sonnenaufgang.

Die optionale Funktion "Office-Mode" ermöglicht es, den natürlichen Lichtverlauf teilweise zu übergehen. Dies bedeutet, dass wahlweise an Stelle der Anpassung an den natürlichen Verlauf teilweise eine Anpassung an Arbeitszeiten oder Ruhezeiten vorgenommen wird. Zum Beispiel kann während der einstellbaren Arbeitszeit immer kaltweißes Licht erzeugt werden, um seine aktivierende Funktion zu nutzen. Ein anders Beispiel für die Verwendung des "Office Mode" ist im Heimbereich am Morgen ab 7:00 immer kaltweißes Licht um ebenfalls die aktivierende Funktion des kälteren Lichtes zu nutzen.

Da am Abend bzw. in der Nacht die Farbtemperatur auf warmweiß gesenkt wird, stört die tagsüber positive Wirkung des kaltweißen Lichts den Schlafrhythmus nicht mehr.

Abgesehen von diesen bewusst gewählten Abweichungen bleibt jedoch die möglichst exakte Anpassung an den natürlichen Verlauf der Lichtfarbe weiter aufrecht.

Beim erfindungsgemäßen Verfahren ist vorgesehen, dass über den RDS-Empfänger auf den Aufstellungsort der Beleuchtungseinrichtung rückgeschlossen wird. Da das RDS-Signal eine Senderkennung enthält, kann aus den empfangenen Frequenzen rückgeschlossen werden, von welchem Radiosender das jeweilige Signal stammt. Damit ist eine approximative Ortsbestimmung möglich, deren Genauigkeit auch dadurch erhöht werden kann, dass zwei oder mehr Sender mit RDS-Signal ausgewertet werden. Da eine Ortsungenauigkeit von beispielsweise 50 km in Ost-West-Richtung in Mitteleuropa lediglich einige Minuten Unterschied in Bezug auf den Sonnenstand ausmacht, kann auf diese Weise die lokale astronomische Zeit ausreichend genau bestimmt werden. Der besondere Vorteil dieser Ausführungsvariante besteht darin, dass der Benutzer keine besondere Einstellungsarbeit in Bezug auf den Aufstellungsort des Beleuchtungskörpers vornehmen muss.

Zusätzlich zur Lichtfarbe kann bevorzugt auch die Intensität, d.h. die Beleuchtungsstärke zeitabhängig eingestellt werden, wodurch es möglich ist, die Effekte zu verstärken.

Die vorliegende Erfindung betrifft auch eine Beleuchtungseinrichtung für Innenräume mit mindestens einem Leuchtmittel mit veränderbarer Farbtemperatur und mit einer Steuerungseinheit, um die Farbtemperatur des Leuchtmittels der Tageszeit entsprechend zu verändern.

Erfindungsgemäß ist diese Beleuchtungseinrichtung dadurch gekennzeichnet, dass die Steuerungseinheit mit einem RDS-Empfänger zur Ermittlung der Uhrzeit verbunden ist.

Eine besonders einfache Ausführungsvariante der Erfindung wird erreicht, wenn die Steuerungseinheit in die Beleuchtungseinrichtung integriert ist. So kann beispielsweise eine Stehlampe oder ein anderer Beleuchtungskörper in herkömmlicher Weise angeschlossen, aufgestellt bzw. montiert werden und bringt die gesamte Funktionalität der Anpassung der Lichtfarbe mit, so dass keinerlei Zusatzmaßnahmen erforderlich sind.

Eine weitere Vereinfachung kann erreicht werden, wenn die Steuerungseinheit in das Leuchtmittel integriert ist. Dadurch kann die Erfindung auch bei bereits bestehenden herkömmlichen Beleuchtungskörpern durch Verwendung alternativer, erfindungsgemäßer Leuchtmittel verwirklicht werden.

Eine weitere besonders begünstigte Ausführungsform der Erfindung sieht vor, dass die Steuerungseinheit mit einer Batterie gepufferten Uhr ausgestattet ist. Um die richtige Lichtfarbe bereits beim Einschalten einer erfindungsgemäßen Beleuchtungseinrichtung ansteuern zu können, ist es erforderlich, dass die Steuerungseinrichtung auch in ausgeschaltetem Zustand das jeweils aktuelle Zeitsignal bereithält. Sofern die Beleuchtungseinrichtung dauerhaft mit Strom versorgt wird ist dies kein Problem. Wenn es sich jedoch um eine Beleuchtungseinrichtung mit eingebauter Steuerungseinheit handelt, die durch einen externen Ein/AusSchalter angesteuert wird, steht erst nach dem Einschalten Strom zur Verfügung, um über das RDS-Signal die aktuelle Zeit bestimmen zu können. Um sofort nach dem Einschalten die korrekte Farbtemperatur bereitstellen zu können, wird in der Steuerungseinheit eine permanent laufende Uhr bereitgehalten. Diese wird bei eingeschalteter Beleuchtungseinrichtung über das RDS-Signal korrigiert, um etwaige Ungenauigkeiten zu vermeiden.

Die einfachste Variante der vorliegenden Erfindung kommt ohne jeglichen Parametrieraufwand für den Anwender aus.

Als Option, die vor allem für Büro oder Arbeitszimmer gedacht ist, kann die Leuchte oder das Leuchtmittel z.B. über einen USB Anschluss oder ähnlichem und einer zugehörigen Software so eingestellt werden, dass während definierbarer Arbeitszeiten immer kaltweißes Tageslicht erscheint. Vor der eingestellten Arbeitszeit bzw. nach Ablauf der eingestellten Arbeitszeit beginnt die Dämmerung mit der selben Zeit, wie der natürliche Sonnen auf- bzw. Untergang dauern würde (in Österreich ca. 30 Minuten).

In weiterer Folge wird die vorliegende Erfindung anhand der in den Figuren dargestellten Ausführungsbeispiele näher erläutert. Es zeigen:

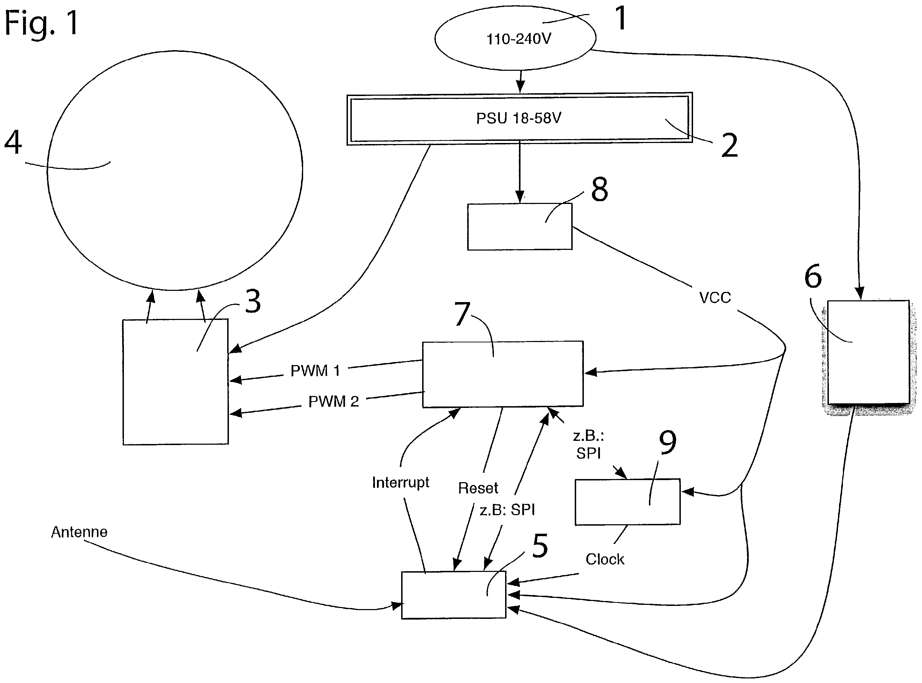

- Fig. 1: ein Schaltungsdiagramm zur Erklärung der vorliegenden Erfindung; und
- Fig. 2: und Fig. 3 schematisch.

Von einer Spannungsquelle 1 wird Netzspannung mit beispielsweise 230 V zur Verfügung gestellt. In einem Netzgerät 2 wird eine Niederspannung erzeugt, um einen LED-Treiber 3 zu versorgen, der das Leuchtmittel 4 ansteuert.

Ein RDS-Modul, das einen RDS-Empfänger 5 beinhaltet und das mit einem Antennenfilter 6 in Verbindung steht, kommuniziert mit einer Microcontroller-Einheit 7, die über PWM-Signale den Treiber 3 ansteuert, um die Farbtemperatur entsprechend einzustellen. Der LED-Treiber 3 stellt somit eine Steuerungseinheit zur Ansteuerung des Leuchtmittels 4 dar. In der Microcontroller-Einheit 7 sind auch Senderinformationen abgelegt, d.h., Informationen darüber, von welchen Senderstandorten welche Programme auf welchen Frequenzen abgestrahlt werden. Aus der Senderkennung, die das RDS-Modul 5 empfängt, kann in Zusammenhang mit der Frequenz auf der Senderstandort rückgeschlossen werden, da ein Programm von verschiedenen Sendern typischerweise auf verschiedenen Frequenzen abgestrahlt wird.

Die Microcontroller-Einheit 7 wird über einen Spannungswandler 8 mit Energie versorgt, der gegebenenfalls eine Pufferbatterie umfassen kann, um eine Systemuhr 9 dauerhaft mit Strom zu versorgen. Der LED-Treiber 3 samt RDS-Modul 5 und Microcontroller-Einheit 7 stellt somit eine Steuerungseinheit 10 zur Ansteuerung des Leuchtmittels 4 dar.

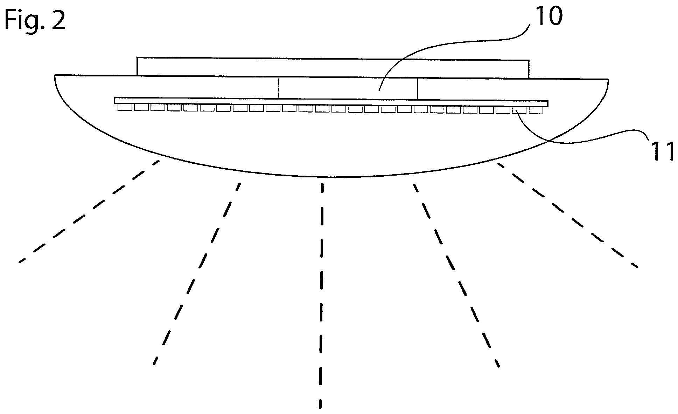

Fig. 2 zeigt schematisch eine Ausführungsvariante, bei der eine Beleuchtungseinrichtung erfindungsgemäß ausgestattet ist.

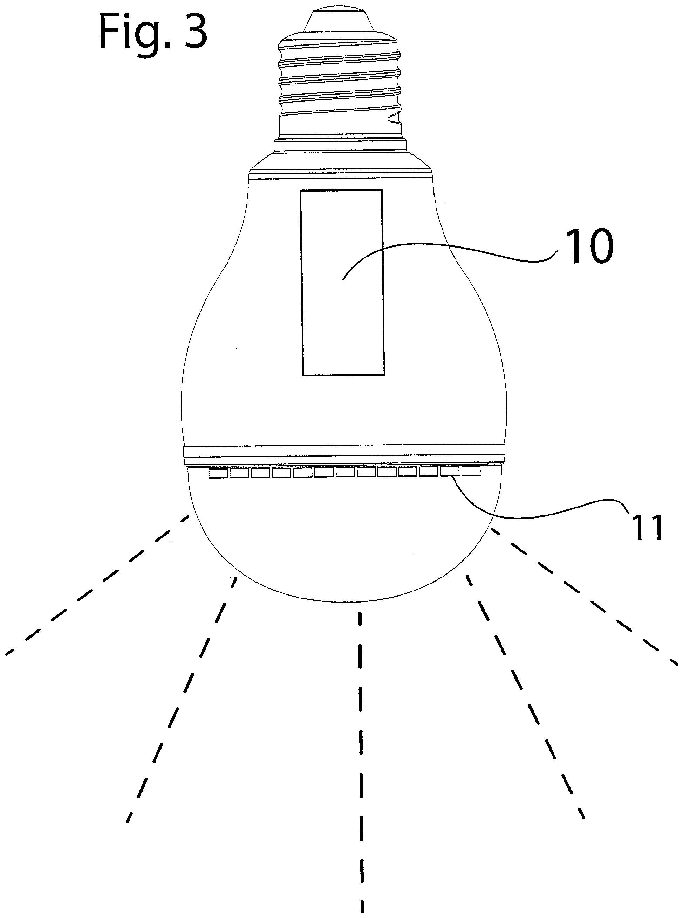

Fig. 3 zeigt ein Leuchtmittel, das die erfindungsgemäße Lösung vollständig mitbringt und in eine herkömmliche Beleuchtungseinrichtung eingesetzt werden kann.

Mit 10 ist hier zusammengefasst die oben dargestellte Steuerungseinheit bezeichnet. Bei der Ausführungsvariante von Fig. 2 sind die Leuchtmittel 4 in einer Leuchtmittelplatine 11 zusammengefasst, die an die in der Leuchte integrierte Steuerungseinheit angedockt ist.

Bei der Ausführungsvariante der Fig. 3 sind die Steuerungseinheit bezeichnet. Bei der Ausführungsvariante von Fig. 2 sind die Steuerungseinheit 10 und die Leuchtmittelplatine 11 im Leuchtmittel 4 selbst angeordnet.

Die vorliegende Erfindung ermöglicht es, die Farbtemperatur von Leuchtmitteln exakt und einfach an die physiologischen Verhältnisse und Bedürfnisse anzupassen.

## Patentansprüche

1. Verfahren zur Steuerung einer Beleuchtungseinrichtung für Innenräume oder Außenbereiche, bei dem die Farbtemperatur eines Leuchtmittels (4) der Tageszeit und/oder der Jahreszeit entsprechend verändert wird, wobei zur Ermittlung der Tageszeit und/oder der Jahreszeit ein ein Zeitsignal enthaltendes RDS-Signal über einen RDS-Empfänger (5) empfangen wird, **gekennzeichnet durch** folgende Schritte:
• Ermitteln von Senderkennungen aus dem RDS-Signal;
• Bestimmen der empfangenen Frequenzen;
• Rückschließen aus den empfangenen Frequenzen und Senderkennungen auf den Radiosender, von dem das Signal empfangen wird;
• Rückschließen auf den Aufstellungsort der Beleuchtungseinrichtung aus dem Radiosender;
• Steuern der Beleuchtungseinrichtung anhand des Zeitsignals und des Aufstellungsorts.

2. Verfahren nach Anspruch 1, **dadurch gekennzeichnet, dass** über den RDS-Empfänger (5) wahlweise an Stelle der Anpassung an einen natürlichen Verlauf der Lichtverhältnisse teilweise eine Anpassung an Arbeitszeiten oder Ruhezeiten vorgenommen wird.

3. Verfahren nach einem der Ansprüche 1 oder 2, **dadurch gekennzeichnet, dass** zusätzlich auch die Beleuchtungsstärke in Abhängigkeit vom RDS-Signal gesteuert wird.

4. Beleuchtungseinrichtung für Innenräume mit mindestens einem Leuchtmittel mit veränderbarer Farbtemperatur und mit einer Steuerungseinheit (7), um die Farbtemperatur des mindestens einen Leuchtmittels (4) der Tageszeit entsprechend zu verändern, wobei die Steuerungseinheit (7) mit einem RDS-Empfänger (5) zur Ermittlung der Uhrzeit und von Senderkennungen aus über RDS-Signale empfangenen Programmen verbunden ist, **dadurch gekennzeichnet, dass** die Steuerungseinheit (7) dazu eingerichtet ist, die Frequenzen der empfangenen Programme zu ermitteln, aus den ermittelten Frequenzen und den bestimmten Senderkennungen auf den Aufstellungsort der Beleuchtungseinrichtung rückzuschließen und die Farbtemperatur des mindestens einen Leuchtmittels anhand der Uhrzeit und des Aufstellungsorts zu verändern.

5. Beleuchtungseinrichtung nach Anspruch 4, **dadurch gekennzeichnet, dass** die Steuerungseinheit (7) in die Beleuchtungseinrichtung integriert ist.

6. Beleuchtungseinrichtung nach einem der Ansprüche 4 oder 5, **dadurch gekennzeichnet, dass** die Steuerungseinheit (7) in das Leuchtmittel (4) integriert ist.

7. Beleuchtungseinrichtung nach einem der Ansprüche 4 bis 6, **dadurch gekennzeichnet, dass** das Leuchtmittel (4) als LED-Einheit ausgebildet ist.

8. Beleuchtungseinrichtung nach einem der Ansprüche 4 bis 7, **dadurch gekennzeichnet, dass** die Steuerungseinheit (7) mit einer Batterie gepufferten Systemuhr (9) ausgestattet ist.

## Claims

1. Method for controlling a lighting device for indoor spaces or outdoor areas, in which the color temperature of a lighting means (4) is changed according to the time of day and/or the season, wherein for determining the time of day and/or the season an RDS signal containing a time signal is received via an RDS receiver (5), **characterised by** the following steps:
• determining station identifiers from the RDS signal;
• determining the received frequencies;
• inferring from the received frequencies and station identifiers the radio station from which the signal is received;
• inferring the installation location of the lighting device from the radio station;
• controlling the lighting device based on the time signal and the installation location.

2. Method according to claim 1, **characterised in that** an adjustment to working hours or rest periods is partially carried out via the RDS receiver (5) selectively in place of the adjustment to a natural course of the light conditions.

3. Method according to one of the claims 1 or 2, **characterised in that** in addition the illuminance is also controlled depending on the RDS signal.

4. Lighting device for indoor spaces, having at least one lighting means with variable color temperature and with a control unit (7) to change the color temperature of the at least one lighting means (4) according to the time of day, wherein the control unit (7) is connected to an RDS receiver (5) for determining the time and of station identifiers from RDS signals of programs received, **characterised in that** the control unit (7) is adapted to determine the frequencies of the received programs, to infer the installation location of the lighting device from the determined frequencies and the determined station identifiers, and to change the color temperature of the at least one lighting means based on the time and place of installation.

5. Lighting device according to claim 4, **characterised in that** the control unit (7) is integrated in the lighting device.

6. Lighting device according to one of the claims 4 or 5, **characterised in that the** control unit (7) is integrated in the lighting means (4).

7. Lighting device according to one of the claims 4 to 6, **characterised in that the** lighting means (4) is designed as an LED unit.

8. Lighting device according to one of the claims 4 to 7, **characterised in that** the control unit (7) is equipped with a battery-buffered system clock (9).

## Revendications

1. Procédé de commande d'un dispositif d'éclairage de volumes internes ou de zones externes selon lequel la température de couleur d'un moyen d'éclairage (4) est modifiée en fonction du moment de la journée et/ou de la période de l'année, et pour déterminer le moment de la journée et/ou la période de l'année un signal RDS renfermant un signal de temps est reçu par un récepteur RDS (5),
**caractérisé par** les étapes suivantes consistant à
- détecter des identifiants d'émetteur à partir du signal RDS,
- déterminer les fréquences reçues,
- déduire des fréquences reçues et des identifiants d'émetteur, l'émetteur radio à partir duquel le signal est reçu,
- déduire le lieu d'implantation du dispositif d'éclairage à partir de l'émetteur radio,
- commander le dispositif d'éclairage à partir du signal de temps et du lieu d'implantation.

2. Procédé conforme à la revendication 1,
**caractérisé en ce que**
par l'intermédiaire du récepteur RDS (5) on met en oeuvre sélectivement au lieu d'une adaptation à une variation naturelle de la luminosité, une adaptation partielle à des temps de travail ou à des temps de repos.

3. Procédé conforme à l'une des revendications 1 et 2,
**caractérisé en ce que**
l'on commande également en outre l'intensité d'éclairage en fonction du signal RDS.

4. Dispositif d'éclairage de volumes internes comportant au moins un moyen d'éclairage ayant une température de couleur variable ainsi qu'une unité de commande (7) permettant de modifier la température de couleur du moyen d'éclairage (4) en fonction du moment de la journée, l'unité de commande (7) étant reliée à un récepteur RDS (5) permettant de détecter l'heure, et des identifiants d'émetteur à partir de programmes reçus par l'intermédiaire de signaux RDS,
**caractérisé en ce que**
l'unité de commande (7) est réalisée de façon à détecter les fréquences du programme reçu, à déduire des fréquences reçues et des identifiants d'émetteur déterminés, le lieu d'implantation de l'installation d'éclairage, et à modifier la température de couleur du moyen d'éclairage à partir de l'heure et du lieu d'implantation.

5. Installation d'éclairage conforme à la revendication 4,
**caractérisée en ce que**
l'unité de commande (7) est intégrée dans l'unité d'éclairage.

6. Installation d'éclairage conforme à l'une des revendications 4 et 5,
**caractérisée en ce que**
l'unité de commande (7) est intégrée dans le moyen d'éclairage (4).

7. Dispositif d'éclairage conforme à l'une des revendications 4 à 6,
**caractérisé en ce que**
le moyen d'éclairage (4) est réalisé sous la forme d'une unité de LED.

8. Dispositif d'éclairage conforme à l'une des revendications 4 à 7,
**caractérisé en ce que**
l'unité de commande (7) est équipée d'une horloge de système (9) équilibrée par une batterie.
